# EUROPEAN PATENT SPECIFICATION

(11) **EP 1 184 803 B1**
(45) Date of publication and mention of the grant of the patent: **17.10.2007**
(21) Application number: 01120999.6
(22) Date of filing: 31.08.2001
(51) Int. Cl.: G06K 7/10, G02B 26/10, G02B 17/08

(54) **Electro-optical scanning assembly with one-piece oscillatable focussing/scan element**
Elektro-optische Abtastvorrichtung mit einstückigem oszillierenden Fokussier-/Lesekopf
Ensemble de balayage electro-optique avec module de balayage et focalisation en une partie oscillant

(30) Priority: 31.08.2000 US 724745
(43) Date of publication of application: 06.03.2002
(73) Proprietor: Symbol Technologies, Inc., Holtsville, New York 11742-1300 (US)
(72) Inventor: Dvorkis, Paul, Holtsville, NY 11742-1300 (US); Barkan, Edward, Holtsville, NY 11742-1300 (US); Li, Yajun, Holtsville, NY 11742-1300 (US)
(74) Representative: Wagner, Karl H.

(56) References cited:
- EP-A- 0 367 300
- DE-A- 3 408 114
- GB-A- 2 324 168
- US-A- 4 387 297
- US-A- 5 015 831
- US-A- 5 187 353
- US-A- 5 521 367
- US-A- 5 661 290
- US-A- 5 705 799
- US-A- 5 949 068

## Description

### Technical Field

This invention relates generally to hand-held scanning systems which "read" indicia such as bar code symbols, and in particular to novel miniature assemblies with an oscillatable focussing/scan element.

### Background Art

Various optical readers and scanning elements have been developed for reading bar code symbols appearing on a label or the surface of an article. The bar code symbol itself is a coded pattern of indicia comprised of a series of bars of various widths spaced apart from one another to bound spaces of various widths, the bars and spaces having different light-reflecting characteristics. The readers and scanning elements electro-optically transform the graphic indicia into electrical signals, which are decoded into alphanumerical characters intended to be descriptive of the article or some characteristic of it. Such characters typically are represented in digital form, and utilized as an input to a data processing system for applications in point-of-sale processing, inventory control and the like. Scanning systems of this general type have been disclosed, for example, in U.S. Patents Nos. 4,251,798; 4,360,798; 4,369,361; 4,387,297; 4,409,470 and 4,460,120, all assigned to the assignee of the present application.

One embodiment of such a scanning system; as disclosed in some of the above patents, resides in, inter-alia, a hand-held, portable laser scanning head supported by a user. The scanning head is configured to enable the user to aim the head at a target to emit a light beam toward a symbol to be read. The light source is a laser scanner typically in the form of a gas or semiconductor laser element. Use of semiconductor devices as the light source in scanning systems is particularly desirable because of the small size, low cost and low power requirements of semiconductor lasers. The laser beam is optically modified, typically by a lens, to form a beam spot of a certain size at the target distance. Preferably, the beam spot size at the target distance is approximately the same as the minimum width between regions of different light reflectivity, i.e., the bars and spaces of the symbol.

The bar code symbols are formed from bars or elements typically rectangular in shape with a variety of possible widths. The specific arrangement of elements defines the character represented according to a set of rules and definitions specified by the code or "symbology" used.

A one-dimensional single-line scan, as ordinarily provided by hand-held readers, functions by repetitively scanning the light beam in a line or series of lines across the symbol using a scanning component such as a mirror disposed in the light path. The scanning component may either sweep the beam spot across the symbol and trace a scan line across and past the symbol, or scan the field of view of the scanner, or do both.

Scanning systems also include a sensor or photo-detector, usually of semiconductor type, which functions to detect light reflected from the symbol. The photo-detector is therefore positioned in the scanner or in an optical path in which it has a field of view which extends across and slightly past the symbol. A portion of the reflected light which is reflected off the symbol is detected and converted into an electrical signal, and electronic circuitry or software decodes the electrical signal into a digital representation of the data represented by the symbol that has been scanned. For example, the analog electrical signal from the photo-detector may typically be converted into a pulse-width modulated digital signal, with the widths corresponding to the physical widths of the bars and spaces. Such a signal is then decoded according to the specific symbology into a binary representation of the data encoded in the symbol, and to the alpha-numeric characters so represented.

The decoding process in known scanning systems usually works in the following way. The decoder receives the pulse-width modulated digital signal from the scanner, and an algorithm implemented in software attempts to decode the scan. If the start and stop characters and the characters between them in the scan were decoded successfully and completely, the decoding process terminates and an indicator of a successful read (such as a green light and/or an audible beep) is provided to the user. Otherwise, the decoder receives the next scan, performs another decode attempt on that scan, and so on, until a completely decoded scan is achieved or no more scans are available.

Resonant scan elements are known in the art. Such elements typically are provided with a flexural strip of Mylar^{®} or other material cantilever-mounted to a base and supporting a miniature permanent magnet positioned within a coil. The coil is secured to a base, and a scan mirror is attached to the free end of the cantilever-mounted flexural strip. By changing the dimensions or flexural characteristics of the cantilever-mounted strip, the mass of the strip, the permanent magnet and mirror, or the distribution of mass on the flexural strip, different resonant frequencies can be established.

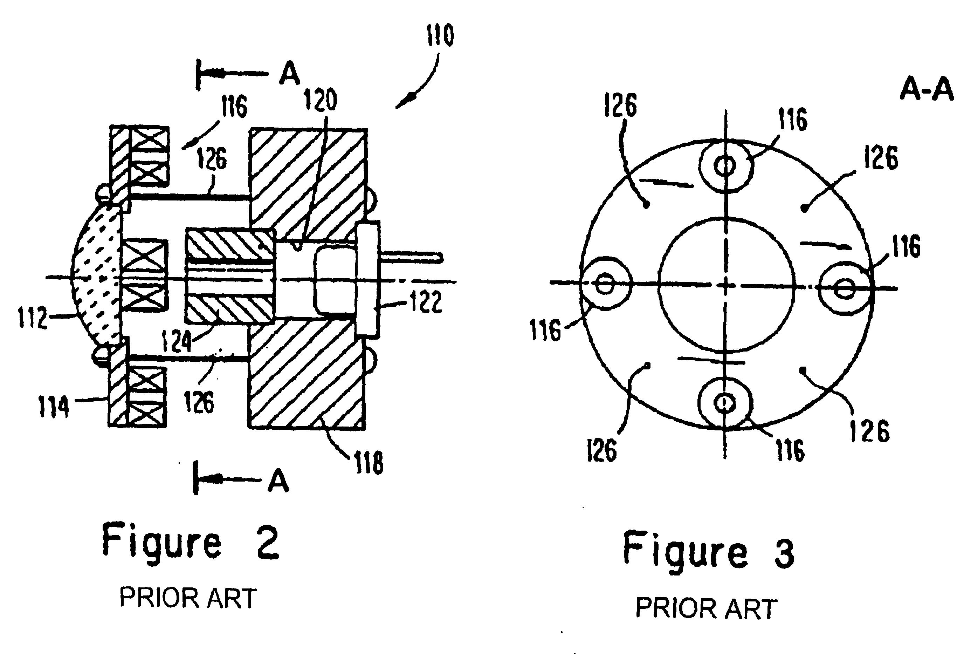

In Figs. 2 and 3, a scan module 110 supports an oscillates an objective lens 112 that is mounted on a circuit board 114 that also carries four electric coils 116 equally spaced along the four quadrants of the circuit board. A support member 118 has a central opening 120 for receiving and retaining a light emitting diode 122 that preferably is a laser-diode. At a side of the support 118, opposite the diode 122, is a permanent magnet 124 that interacts with an electromagnetic field produced by the coils 116 when an electric current is applied. This arrangement is disclosed in US 5,705,799.

The circuit board 114 and support 118 are interconnected by four semi-rigid wires 126 that also carry electric current from a driver circuit to the four coils. By changing the connections between the coils, 1-D or 2-D scan patterns may be selectively achieved.

Wires 126 preferably are tin-soldered to the circuit board 114 and support 118. The material of the wires preferably is a phosphor-bronze alloy, although any other material that conducts electricity and provides semi-rigid support of the circuit board 114 and lens 112 with respect to support 118 may be used.

Magnet 124 is in the form of a ring, and may be magnetized axially. The central hole of magnet 124 serves as an aperture stop for the laser beam.

Alternatively, the permanent magnet 124 may be multiply poled around its circumference. For example, the poling of the permanent magnet may be such that there are four poles, with South poles being oriented at 0° and 180° and North poles at 90° and 270° along the circumference. By suitably energizing two of the four coils 116, the lens and coil assembly will rotate slightly, and hence the semi-rigid wires will begin to form a helix reducing the distance between the lens 112 and the laser beam source 122 to focus the beam. The other two coils are energized to oscillate the lens assembly to produce appropriate scanning.

US-A-5,949,068 discloses an optical reader for reading optical indicia including an imaging element for forming an image of the optical indicia; a photodetector element having an aperture with a width smaller than the width of a smallest element in the image to be discerned by the optical reader; and optical means for causing the image to be swept past the aperture to produce an output of the photodetector indicative of the optical indicia. The optical reader also may include an optical element which varies an image distance between the imaging element and the photodetector with respect to time to correspondingly vary an object distance at which the optical indicia is located from the imaging element in order that the image is focused at the image plane.

DE-A-34 08 114 discloses a lens combination for a catadioptric mirror telescope including a spherical lens having mirrored surfaces and an aspherical lens on a common optical axis.

GB-A-2 324 168 discloses a deflector which comprises a array of rotating lenses which pass across an optical beam in order to provide an unidirectional scan. The lenses may be modified in order to control the shape of a focal plane. A beam expander providing two arcuate opposed beams may supply light to the deflector, in order to eliminate coma. The scanning system may also include beam splitters. The scanner is for the recording or writing of an image and use in bar code scanning is mentioned.

According to US-A-5,521,367, the laser diode of an optical scanning system is located in a separate unit and light therefrom carried to a remote scan head via an optical fiber. This reduces the size and weight of the scan head and reduces the temperature sensitivity of the scan head. The scan head may include an optical sensor for detecting light reflected from scanned symbols. Alternatively, the separate unit may house the sensor, and the same fiber or an additional fiber will collect the reflected light and transmit that light back to the sensor. The disclosure also encompasses a number of electromagnetic and piezoelectric systems for producing a scanning motion of the beam emitted by the scan head.

US-A-5,015,831 discloses miniature scan modules which have at least two printed circuit boards on at least one of which a source of a light beam, such as a laser diode or light emitting diode is mounted and another board which may be fixed in the apparatus in which the module is installed The boards are interconnected by structure including a flexure which defines a pivot axis for the light source and the board on which it is mounted. The flexure is made up of a plurality of elements which are insulated from each other and provide separate conductive paths for electrical power and signals between the boards. The board on which the light source is mounted is driven to oscillate about the pivot axis, thereby scanning the beam across the target. A photo detector may be mounted on the same board as the source and receives light reflected from the target, as through a collecting lens.

US-A-5,661,290 discloses a mirrorless beam scanning unit. A flexible support structure, such as one or more strips of mylar, movably mounts the light emitter in response to a motive force, for example as might be applied by a combination of a permanent magnet coupled to the light emitter and a fixedly mounted electromagnet driven by an alternating current signal. Reciprocation of the light emitter during emission of light by the light emitter causes the light to scan a surface, such as a surface beating a bar code label.

US-A-5,187,353 discloses an arrangement for reading bar code symbols including a laser diode unit having a forwardly-directed laser beam emitted along an optical path toward a symbol for reflection therefrom to generate reflected light, and a rearwardly-directed laser beam, and a monitor photodiode in optical communication with the rearwardly-directed laser beam for producing a signal indicative of the output power of the laser diode. The arrangement also includes a collector exterior to the laser diode unit for collecting at least a portion of the reflected light from the symbol, and for directing the collected portion to the monitor photodiode to generate an information signal descriptive of the symbol.

EP-A-0 367 300 discloses a portable laser diode scanning head which is aimable at each symbol to be read and which emits and receives non-readily-visible laser light, and is equipped with a trigger-actuated aiming light arrangement for visually locating and tracking each symbol. The aiming light is focussed and directed by a concave collecting mirror which may be oscillated.

US-A-4,387,297 discloses a portable laser scanning system for reading bar code symbols includes a light-weight and small-sized laser scanning head. The laser source, power supply component, optics, scanning elements, sensor circuit, and signal processing circuitry are specially designed for minimal size and weight and volume such that they can all be mounted in the head. Highspeed oscillating scanning motors and/or penta-bimorph scanners are used as scanning elements. A trigger initiates repetitive scanning of each object bearing a symbol, and an indicator indicates when the scanning of that particular object has been terminated.

Finally, US-A-5,705,799 was used as a basis for the preamble of claim 1 and discloses an optical scanning assembly which turns an optical element in opposite circumferential directions about a longitudinal axis along which a light beam from a light source is emitted. The optical element and the light source are mounted on individual supports between which torsion elements are connected. An electrical coil arrangement interacts with a permanent magnet to effect the turning movement.

### Disclosure of the Invention

This invention generally relates to a compact assembly for electro-optically scanning indicia, including a support, a light source such as a laser diode mounted on the support, an oscillatable optical component, and a drive for oscillating the component. In particular, the present invention provides a compact assembly for scanning indicia as set forth in claim 1. Preferred embodiments of the present invention may be gathered from the dependent claims.

The novel one-piece optical component is preferably constituted of a light-transmissive material having a first curved surface constituting part of the focussing element and through which the beam enters the component, and a second reflecting surface from which the focused beam is reflected. The second surface is coated with a reflective coating and constitutes part of the scan element. The component further includes a third curved surface through which the reflected beam exits the component. The third surface acts as a correcting element for scan aberration correction. The component still further includes extensions of one-piece with the elements. The extensions are operative for holding the permanent magnet.

Preferably, the component is mounted on a shaft journaled at opposite ends on the support. A biasing element is operatively connected between the component and the support, for constantly exerting a restoring force on the component to return the latter to a neutral position. The biasing element is preferably an elongated leaf spring having one end fixed to the component and an opposite spring end movably connected to the support. The opposite spring end passes between a pair of friction posts on the support and slides between the posts during oscillation of the component.

The light beam entering the component is at a right angle to the beam exiting the component in the neutral position. The second reflecting surface preferably lies in a plane oriented at a 45° angle to the beam entering the component. When the support is configured as a cylindrical housing having a longitudinal axis, the entering beam travels along the longitudinal axis, and the exiting beam travels radially and passes through an exit port formed in a side wall of the housing.

The light source is preferably a laser diode received in an open end of the housing. The drive coil surrounds the diode. A sensor for detecting light reflected from the indicia is mounted on the housing adjacent the coil and the diode.

Still other objects and advantages of the present invention will become readily apparent to those skilled in the art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects, all without departing from the invention. Accordingly, the drawing and description are to be regarded as illustrative in nature, and not as restrictive.

### Brief Description of the Drawings

- Figure 1: is a schematic diagram of a scan assembly in accordance with the present invention;
- Figures 2 and 3: are side and front views of a miniature scanner assembly in accordance with the prior art (see US 5,705,799), and
- Figure 4: is a sectional side view of a compact scanner assembly, in accordance an embodiment of the present invention.

### Best Mode for carrying out the Invention

As used in this specification, the terms "symbol" and "bar code" are intended to be broadly construed and to cover not only patterns composed of alternating bars and spaces of various widths, but also other one or two dimensional graphic patterns, as well as alphanumeric characters.

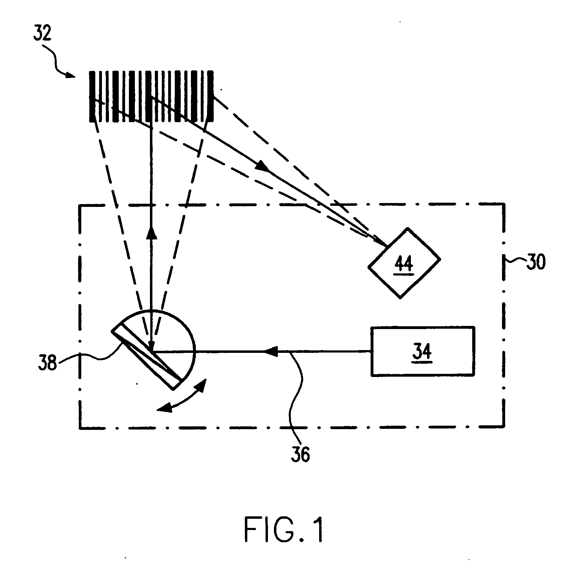

As schematically indicated in Figure 1, an outgoing beam 36 is generated in a scanner 30 by a light source 34, such as a laser diode of the like, and directed to impinge upon a bar code symbol 32 that ordinarily is positioned a few cm (inches) from the front of the scanner. However, other applications may require scanning a target that is a considerable distance, e. g., 60 feet (18,29 m) from the scanner. The outgoing beam 36 is scanned by a one-piece, integral or unitary focusing/scanning element 38 so that the scanning beam traverses the symbol to be read. Light reflected from the symbol is received by the scanner 30 and detected by photodetector 44.

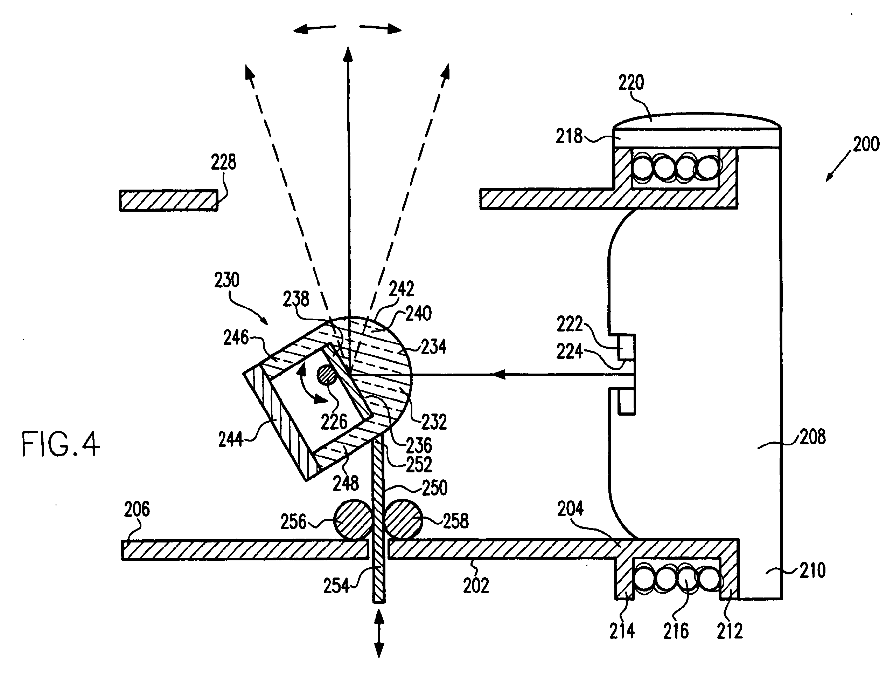

Figure 4 depicts an embodiment of a compact assembly 200 for electro-optically scanning indicia, in accordance with the present invention. The assembly 200 includes a support 202 preferably a cylindrical housing extending a longitudinal axis between opposite ends 204, 206. A light source 208, preferably a laser diode, is inserted into open end 204. An annular shoulder 210 on the source abuts against an annular flange 212 at the open end 204 to define the installed position of the source. When electrically activated, the source emits a laser beam along a path toward the indicia to be scanned.

The support 202 has an annular collar 214 spaced axially from the flange 212. An electromagnetic coil 216 is wound around the support between the collar 214 and the flange 212. A sensor 218, preferably a photodiode, is mounted radially exteriorly of the flange and the collar, and overlies the coil 216 and the source 208. The sensor 218 detects light reflected off the indicia, and generates an electrical signal indicative of the variable intensity of the reflected light from the indicia. A filter 220 is positioned over the sensor, it may be a light-transmissive plastic of glass filter, or even a coating of a liquid filter material that is cured in place on the sensor.

The source 208 includes a aperture plate 222 having a aperture stop 224 through which the emitted beam passes. An oscillatable optical component 230 is mounted in the path of the beam, and on a shaft 226 whose opposite ends are journaled in bearings on opposite sides of the cylindrical housing. An exit window or port 228 is formed in the side wall of the housing.

The component 230 is formed of a light-transmissive, optically modifying material, such a synthetic plastic or glass, and includes a focusing element 232 having an outer convexly curved surface 234 through which the emitted beam first enters the component and is focused at a focal point within a working range of distances at which the indicia are located, and a scan element 236 having an outer planar surface 238 coated with a reflective coating preferably a metallic coating formed of nickel, gold or chromium, for reflecting the focused beam away from the coated surface 238. The coated surface 238 is oriented at a 45° angle to direct the reflected beam perpendicularly to the incident focused beam. The focusing and scan elements are of one-piece with each other, or integrally formed.

The component 230 also preferably has a connecting element 240 having a outer convexly curved surface 242 through which the reflected beam exits the component and is focused for correction of scan aberration. The correcting element is likewise of one-piece, or integral, with the component.

A permanent magnet 244 is fixedly mounted for joint oscillation with the component 230 on a pair of rear extensions or arms 246, 248, also of one-piece with the component. The magnet 244 generates a permanent magnetic field which interacts with the electromagnetic field generated by the coil 216 upon energizing of the coil by an energizing drive current, such as a train of square waves, or any periodic drive signal. The component oscillates in alternate circumferential directions about the shaft over arc lengths on the order of 20°-25° in each direction from an equilibrium or neutral position depicted in Figure 4.

The neutral position is established by a biasing element or flexure 250, preferably a planar leaf spring, having one end 252 fixed to the component, e. g. by a fastener (not shown), and an opposite end 254 slidably mounted between a pair of friction posts 256, 258 mounted on the support. The flexure end 254 is frictionally captured, but movable, between the posts. The flexure 252 constantly exerts a restoring force on the component to return the latter to the neutral position.

During energization of the coil by the drive current, the interacting magnetic fields causes the magnet and the component to oscillate, thereby flexing the flexure. The flexure bends in one, and then in an opposite, rounded shape. The flexure end 254 slides back and forth through the posts during the bending of the flexure. Preferably, the flexure is constituted of a resilient material such as Mylar^{®}, a thin polyester film about 0.0254 mm (0.001 inch) thick.

Focusing of the beam is advantageously achieved by the same component that performs the scanning or sweeping of the beam across the indicia. The overall assembly occupies a compact volume of the order of 6.5 mm x 6.5 mm x 5.6 mm.

It will be understood that each of the elements described above, or two or more together, also may find a useful application in other types of constructions differing from the types described above.

While the invention has been illustrated and described as embodied in an electro-optical scanning assembly with tone-piece oscillatable, focusing/scan element, it is not intended to be limited to the details shown, since various modifications and structural changes may be made without departing in any way from the scope of the present invention as defined in the appended claims.

## Claims

1. A compact assembly (200) for electro-optically scanning indicia, comprising:
a) a support (202);
b) a light source (208) mounted on the support (202), adapted to emit a light beam;
c) an oscillatable optical component (230); and
d) a drive for oscillating the optical component (230) relative to the support (202),
the drive including a permanent magnet (244) operative for generating a permanent magnetic field, and an energizable electrical coil (216) operative, when energized by an energizing drive current, for generating an electromagnetic field that interacts with the permanent magnetic field to effect oscillation of the optical component (230) for scanning the light beam over the indicia;
wherein the oscillatable optical component (230) includes a light-transmissive material having a first surface (234) through which the light beam enters the optical component (230) to be focused,
wherein the assembly (200) is **characterized in that**:
the permanent magnet (244) is mounted for joint oscillation with the optical component (230), and the electrical coil (216) is mounted on the support (202),
the oscillatable optical component (230) includes a second reflecting surface (238) from which the entering light beam is reflected, and a third surface (242) through which the reflected light beam exits the optical component (230) away from the support (202) toward the indicia.

2. The assembly (200) of claim 1, wherein the support (202) is a tubular housing having an open end region (204), and wherein the light source (208) extends through the open end region (204).

3. The assembly (200) of claim 2, wherein the housing has an annular flange (212), and wherein the light source (208) including a casing having a shoulder (210) that abuts against the flange (212).

4. The assembly (200) of claim 2, wherein the coil (216) surrounds the open end region (204) and at least part of the light source (208).

5. The assembly (200) of claim 2, wherein the light source (208) is a laser diode.

6. The assembly (200) of claim 2, wherein the housing has a window (228)through which the light beam is directed away from the support (202).

7. The assembly (200) of claim 1, wherein the first surface (234) is curved.

8. The assembly (200) of claim 1, wherein the second reflecting surface (238) is coated with a reflective coating.

9. The assembly (200) of claim 1, wherein the third surface (242) is curved to correct for scan aberration.

10. The assembly (200) of claim 1, wherein the optical component (230) includes extensions (246,248) for holding the magnet (244).

11. The assembly (200) of claim 1, wherein the support (202) includes a tubular housing, and a shaft (226) journaled at opposite ends on the housing; and wherein the optical component (230) is mounted on the shaft (226) for oscillating movement in alternate circumferential directions about an axis extending along the shaft (226).

12. The assembly (200) of claim 1, and further comprising a biasing element (250) operatively connected between the optical component (230) and the support (202), for constantly exerting a restoring force on the optical component (230) to return the optical component (230) to a neutral position in a path of the light beam.

13. The assembly (200) of claim 12, wherein the biasing element (250) is an elongated spring having one spring end (252) fixed to the optical component (230) and an opposite spring end (254) movably connected to the support (202).

14. The assembly (200) of claim 13, wherein the support (202) has a pair of friction posts (256,258) between which the opposite spring end is slidingly mounted.

## Patentansprüche

1. Eine kompakte Anordnung (200) zum elektro-optischen Scannen von (Kenn-) Zeichen, die Folgendes aufweisen:
a) eine Tragvorrichtung (202);
b) eine Lichtquelle (208), die auf der Tragvorrichtung (202) angebracht ist, und angepasst ist, um einen Lichtstrahl zu emittieren;
c) eine oszillierbare optische Komponente (230); und
d) einen Antrieb zum Oszillieren der optischen Komponente (230) relativ zu der Tragvorrichtung (202),
wobei der Antrieb einen Permanentmagneten (244), der betriebsbereit ist, um ein permanentes Magnetfeld zu erzeugen, und eine erregbare, elektrische Spule (216) umfasst, die betriebsbereit ist, um bei Erregung durch einen erregenden Antriebsstrom ein elektromagnetisches Feld zu erzeugen, welches mit dem permanenten Magnetfeld interagiert, um die Oszillation der optischen Komponente (230) zum Scannen des Lichtstrahls über die (Kenn-) Zeichen hinweg zu bewirken;
wobei die oszillierbare, optische Komponente (230) ein lichtdurchlässiges Material umfasst, welches eine erste Oberfläche (234) besitzt, durch welche der Lichtstrahl in die optische Komponente (230) eintritt, um fokussiert zu werden,
wobei die Anordnung (200), **dadurch gekennzeichnet ist, dass**
der Permanentmagnet (244) zur gemeinsamen Oszillation mit der optischen Komponente (230) angebracht ist und die elektrischen Spule (216) auf der Tragvorrichtung (202) angebracht ist,
wobei die oszillierbare, optische Komponente (230) ein zweite reflektierende Oberfläche (238) umfasst, von der der eintretende Lichtstrahl reflektiert wird, sowie eine dritte Oberfläche (242) durch welche der reflektierte Lichtstrahl aus der optischen Komponente (230) weg von der Tragvorrichtung (202) zu den (Kenn-)Zeichen hin austritt.

2. Anordnung (200) gemäß Anspruch 1, wobei die Tragvorrichtung (202) ein rohrförmiges Gehäuse mit einem offenen Endbereich (204) ist und wobei sich die Lichtquelle (208) durch den offenen Endbereich (204) erstreckt.

3. Anordnung (200) gemäß Anspruch 2, wobei das Gehäuse einen ringförmigen Flansch (212) besitzt, und wobei die Lichtquelle (208) ein Gehäuse umfasst, welches eine Schulter (210) besitzt, die gegen den Flansch (212) stößt.

4. Anordnung (200) gemäß Anspruch 2, wobei die Spule (216) den offenen Endbereich (204) und zumindest einen Teil der Lichtquelle (208) umgibt.

5. Anordnung (200) gemäß Anspruch 2, wobei die Lichtquelle (208) eine Laserdiode ist.

6. Anordnung (200) gemäß Anspruch 2, wobei das Gehäuse ein Fenster (228) besitzt, durch welches der Lichtstrahl weg von der Tragvorrichtung (202) gerichtet wird.

7. Anordnung (200) gemäß Anspruch 1, wobei die erste Oberfläche (234) gekrümmt ist.

8. Anordnung (200) gemäß Anspruch 1, wobei die zweite, reflektierende Oberfläche (238) mit einer reflektierenden Beschichtung beschichtet ist.

9. Anordnung (200) gemäß Anspruch 1, wobei die dritte Oberfläche (242) gekrümmt ist, um Scannfehler zu korrigieren.

10. Anordnung (200) gemäß Anspruch 1, wobei die optische Komponente (230) Verlängerungen bzw. Erweiterungen (246, 248) zum Halten des Magneten (244) umfasst.

11. Anordnung (200) gemäß Anspruch 1, wobei die Tragvorrichtung (202) ein rohrförmiges Gehäuse umfasst und eine Welle (226) an gegenüberliegenden Enden auf dem Gehäuse drehbar gelagert ist; und wobei die optische Komponente (230) auf der Welle (226) zur oszillierenden Bewegung in abwechselnden Umfangsrichtungen um eine Achse, die sich entlang der Welle (226) erstreckt, herum angebracht ist,.

12. Anordnung (200) gemäß Anspruch 1, die ferner ein Vorspannungselement (250) aufweist, welches betriebsmäßig zwischen der optischen Komponente (230) und der Tragvorrichtung (202) verbunden ist, um konstant eine Rückstellkraft auf die optische Komponente (230) auszuüben, um die optische Komponente (230) zu einer neutralen Position in einem Pfad des Lichtstrahls zurückzuführen.

13. Anordnung (200) gemäß Anspruch 12, wobei das Vorspannungselement (250) eine langgestreckte Feder ist, deren eines Federende (252) an der optischen Komponente (230) und ein gegenüberliegendes Federende (254) bewegbar mit der Tragvorrichtung (202) verbunden ist.

14. Anordnung (200) gemäß Anspruch 13, wobei die Tragvorrichtung (202) ein Paar von Reibungssäulen (256, 258) besitzt, zwischen denen die gegenüberliegenden Federenden gleitbar angebracht sind.

## Revendications

1. Structure compacte (200) pour effectuer une analyse électro-optique de marquages, comprenant :
a) un support (202) ;
b) une source lumineuse (208) montée sur le support (202), apte à émettre un faisceau lumineux ;
c) un composant optique pouvant osciller (230) ; et
d) un dispositif d'entraînement pour faire osciller le composant optique (230) par rapport au support (202) ;
le dispositif d'entraînement comprenant un aimant permanent (244) actionnable pour produire un champ magnétique permanent, et un bobinage électrique pouvant être excité (216) et actionnable, lorsqu'il excité par un courant d'excitation, pour produire un champ électromagnétique qui agit conjointement avec le champ magnétique permanent pour faire osciller le composant optique (230) pour balayer le faisceau lumineux sur le marquage ;
dans laquelle le composant optique pouvant osciller (230) comprend un matériau transmettant la lumière ayant une première surface (234) par laquelle le faisceau lumineux pénètre dans le composant optique (230) pour être focalisé ;
la structure (200) étant **caractérisée en ce que** :
l'aimant permanent (244) est monté pour une oscillation conjointe avec le composant optique (230), et le bobinage électrique (216) est monté sur le support (202) ;
le composant optique pouvant osciller (230) comprend une deuxième surface réfléchissante (238) sur laquelle le faisceau lumineux entrant est réfléchi, et une troisième surface (242) par laquelle le faisceau lumineux réfléchi sort du composant optique (230) hors du support (202) en direction du marquage.

2. Structure (200) selon la revendication 1, dans laquelle le support (202) est un boîtier tubulaire comportant une région d'extrémité ouverte (204), et dans laquelle le faisceau lumineux (208) s'étend à travers la région d'extrémité ouverte (204).

3. Structure (200) selon la revendication 2, dans laquelle le boîtier comporte un rebord annulaire (212), et dans laquelle la source lumineuse (208) comprend un boîtier comportant un épaulement (210) qui bute contre le rebord (212).

4. Structure (200) selon la revendication 2, dans laquelle le bobinage (216) entoure la région d'extrémité ouverte (204) et au moins une partie de la source lumineuse (208).

5. Structure (200) selon la revendication 2, dans laquelle la source lumineuse (208) est une diode laser.

6. Structure (200) selon la revendication 2, dans laquelle le boîtier comporte une fenêtre (228) à travers laquelle le faisceau lumineux est dirigé hors du support (202).

7. Structure (200) selon la revendication 1, dans laquelle la première surface (234) est courbe.

8. Structure (200) selon la revendication 1, dans laquelle la deuxième surface réfléchissante (238) est revêtue d'un revêtement réflecteur.

9. Structure (200) selon la revendication 1, dans laquelle la troisième surface (242) est courbe pour corriger une aberration de balayage.

10. Structure (200) selon la revendication 1, dans laquelle le composant optique (230) comprend des parties allongées (246, 248) pour maintenir l'aimant (244).

11. Structure (200) selon la revendication 1, dans laquelle le support (202) comprend un boîtier tubulaire, et un arbre (226) monté en rotation à des extrémités opposées sur le boîtier ; et dans laquelle le composant optique (230) est monté sur l'arbre (226) pour un mouvement oscillant dans des directions circulaires alternées autour d'un axe s'étendant suivant l'arbre (226).

12. Structure (200) selon la revendication 1, comprenant en outre un élément de sollicitation (250) relié de façon fonctionnelle entre le composant optique (230) et le support (202), pour exercer de façon constante une force de rappel sur le composant optique (230) pour ramener le composant optique (230) vers une position neutre dans un trajet du faisceau lumineux.

13. Structure (200) selon la revendication 12, dans laquelle l'élément de sollicitation (250) est un ressort allongé ayant une extrémité de ressort (252) fixée au composant optique (230) et une extrémité de ressort opposée (254) reliée de façon mobile au support (202).

14. Structure (200) selon la revendication 13, dans laquelle le support (202) comporte une paire de montants de friction (256, 258) entre lesquels l'extrémité de ressort opposée est montée de façon coulissante.
